# EUROPEAN PATENT SPECIFICATION

(11) **EP 2 545 127 B1**
(45) Date of publication and mention of the grant of the patent: **19.11.2014**
(21) Application number: 11715015.1
(22) Date of filing: 08.03.2011
(51) Int. Cl.: C09D 5/20, C09D 131/04, C08K 5/103, C08L 31/04

(54) **TEMPORARY PROTECTIVE COATING COMPOSITION**
ZUSAMMENSETZUNG FÜR EINEN TEMPORÄREN SCHUTZSANSTRICH
COMPOSITION POUR PEINTURE DE PROTECTION TEMPORAIRE

(30) Priority: 12.03.2010 GB 201004148
(43) Date of publication of application: 16.01.2013
(73) Proprietor: Atac UK Ltd, Swinderby, Lincoln LN6 9NA (GB)
(72) Inventor: BEDWELL, Peter, James, Lincoln LN6 9NA (GB)
(74) Representative: Loven, Keith James
(86) International application number: PCT/GB2011/050458
(87) International publication number: WO 2011/110846

(56) References cited:
- GB-A- 1 048 993
- GB-A- 1 260 486
- US-A- 3 368 989
- US-A- 3 518 215
- US-A- 3 620 796

## Description

### Field of the Invention

This invention relates to a temporary protective coating composition and to a method of providing a temporary protective coating on an article.

### Background to the Invention

Peelable temporary coatings are used on a variety of articles to provide protection during transit and installation, for example glass, double-glazed windows, doors, PVC or aluminium profiles, kitchen units, baths, sinks, and various metal surfaces. When the protective coating is no longer required, it is simply stripped off by hand and disposed of.

Conventionally, such coatings have been applied in solution form, typically by spraying. Organic solvent-based coatings suffer from the disadvantages that they require a long time to dry, and the evaporation of solvents can present a health risk, as well as a fire and explosion hazard, requiring carefully controlled conditions for the spraying and drying, adding significantly to the cost of using such systems.

To overcome some of these problems, water-based coatings have been developed. While these overcome the fire/explosion hazard, and to a large extent the risk of adverse health effects, such coatings typically need to be applied relatively thickly, and as water evaporates slowly the drying times can be extended, typically about one hour. Forced drying can be applied, but this requires zoned drying ovens, which are expensive to construct and to operate, and occupy a large amount of space. Thus, while water-based compositions are very useful in external applications where drying time is not important, they are wholly unsuitable for production line environments where speed is important.

Most recently, new systems are being developed which employ radiation curing. Such systems require an application station, where the coating is applied as a cold liquid, and a curing station where the coating is irradiated with powerful UV radiation to cure it rapidly. The disadvantages of this system are, however, that the raw materials are relatively expensive, there are irritant hazards, the use of UV radiation sources requires protective shielding to prevent personnel being exposed to the radiation, and the coating materials are thermosetting, and are therefore not recyclable. This means that the stripped coatings have to be disposed of in landfill, which is costly and undesirable environmentally.

The present invention seeks to provide a hot-melt composition which avoids or significantly reduces the disadvantages of the existing compositions. Hot-melt compositions are known from, for example, GB 1361506, which discloses a removable coating including 20-80% by weight of a high molecular weight copolymer of ethylene with 12-45% by weight of one or more comonomers chosen from vinyl acetate and others, and 80-20% of a low molecular weight copolymer of ethylene and 5-30% by weight of one or more comonomers. The coatings are applied as a melt by dipping. GB 1260486 discloses removable coatings sprayed on to a surface as a melt. The composition includes a film-forming ethylene/vinyl acetate copolymer. GB 1048993 discloses a blend of paraffin wax with an ethylene/vinyl acetate copolymer, again applied by dipping. In order to permit the application by spraying or dipping, the viscosity has to be kept low, and it has been found that in practice this means that the resultant hardened coating cannot readily be stripped off as a film, being either too brittle to strip as a film, or lacking sufficient film strength to permit removal as a continuous sheet.

US3620796 discloses strippable protective coating comprising petroleum wax and an ethylene-vinyl acetate copolymer containing 16-22% vinyl acetate. US3518215 discloses strippable wax coatings containing a stripping agent which is either a N-substituted fatty acid amide or a N-alkoxylated amine containing a fatty acid residue.

### Summary of the Invention

According to the invention, there is provided a temporary protective coating composition comprising more than 60% by weight of an ethylene vinyl acetate copolymer (EVA) with a melt flow index (MFI) less than 400 and less than 40% by weight of wax and which forms a flowable liquid at a temperature of from 120°C to 200°C, characterised in that it includes castor oil, hydrogenated castor oil or a mixture of these.

Preferably, the composition comprises: more than 75% by weight of an ethylene vinyl acetate copolymer (EVA) with a melt flow index (MFI) less than 400; and from 1% to less than 25% by weight of wax.

Preferably, the EVA comprises from 14-60% by weight of vinyl acetate, and more preferably at least 18%. In a preferred embodiment, the content of vinyl acetate in the EVA is 28% by weight. The MFI of the EVA is preferably less than 200, more preferably around 100. The composition preferably comprises 80% by weight EVA, and may have 5 to 20%, more preferably 15-19%, by weight of the modified wax. Castor oil, hydrogenated castor oil, or a mixture of these, may be added, preferably in an amount of 1-10% by weight of the composition, preferably 5%.

Antioxidants and UV stabilisers may also be incorporated, typically from 0.1 % to 1% by weight of the composition.

The wax is incorporated to reduce molecular weight adhesion and allow better flow. The wax is suitably a vinyl acetate modified wax, which preferably comprises at least 14% vinyl acetate. Alternatively, the wax may be selected from ethylene waxes, Fischer Tropsch, crystalline and microcrystalline waxes, paraffin chlorinated waxes and bees wax.

Alternatively or additionally, resins may be blended with the polymer in the composition, such as rosins, rosin esters, hydrocarbons, synthetic alpha methyl styrene, styrene, phenolic resins and polyterpene, the content being selected so as to achieve optimum viscosity while not increasing adhesion of the coating to the article to hinder its stripping from the article when no longer required.

Oils and plasticisers may be added.

The invention also provides a method of providing a temporary protective coating on an article, as disclosed in claim 14, comprising melting a composition according to the invention, applying the molten composition to the surface of the article, and allowing the composition to solidify to form a peelable film on said article. The application of the molten composition is suitably by extruding a film of the composition on to the article, or by the use of a roller.

The advantages of the composition and method of the invention are:
1. The coating only requires one application station, so the equipment is cheaper than that required for radiation-cured compositions;
2. The stripped film, being thermoplastic, is readily reusable, or recyclable for other uses, whereas the radiation-cured and water-based compositions are not;
3. The hazards associated with solvent-based or radiation-cured compositions are avoided;
4. The coating hardens within seconds, whereas water- and solvent-based materials can take up to an hour to cure; and
5. The raw material costs are significantly lower than with other compositions.

While the coating has been described as of particular use as a temporary protective coating, it may also be employed as a masking coating, being applied over an article, with sections then be cut out to allow painting, machining, or chemical milling of just the exposed areas, for example.

### Detailed Description of the Invention

### EXAMPLES

Hot melt compositions were formulated with the following (percentages by weight):

[Table 0001]

**Table 1**

| | |
|---|---|
| Ethylene/vinyl acetate copolymer with 28% by weight vinyl acetate and a melt flow index (MFI) of 100 | 80% |
| Vinyl actetate modified wax (AC 400) with 14% vinyl acetate | 15% |
| Castor oil | 2.5% |
| Hydrogenated castor oil | 2.5% |

[Table 0002]

**Table 2**

| | |
|---|---|
| Ethylene/vinyl acetate copolymer with 28% by weight vinyl acetate and a melt flow index (MFI) of 150 | 80% |
| Vinyl actetate modified wax (AC 400) with 14% vinyl acetate | 17.4% |
| Castor Oil | 2.5% |
| Antioxidant BHT | 0.1% |

[Table 0003]

**Table 3**

| | |
|---|---|
| Ethylene/vinyl acetate copolymer with 28% by weight vinyl acetate and a melt flow index (MFI) of 400 | 80% |
| Hydrogenated castor oil | 13.9% |
| Castor oil | 6.0% |
| Antioxidant BHT | 0.1% |

[Table 0004]

**Table 4**

| | |
|---|---|
| Ethylene/vinyl acetate copolymer with 28% by weight vinyl acetate and a melt flow index (MFI) of 150 | 80% |
| Vinyl actetate modified wax (AC 400) with 14% vinyl acetate | 14.9% |
| Castor oil | 5.0% |
| Antioxidant BHT | 0.1% |

All of these compositions gave films easily strippable by hand from glass, aluminium and powder-coated steel. The high polymer content and relatively low MFI mean that the compositions will be very tough and elastic to produce a peelable coating, but the resultant viscosity will be such that application cannot be by dipping or spraying. The coating will therefore need to be applied by extrusion using a slot coater or a roller. Reducing vinyl acetate content will reduce viscosity, which may assist application, but to balance this are reduced adhesion and greater stiffness. The composition set out above is sufficiently strong and elastic to permit it to be stripped by hand from very large surface areas, such as a large planar sheet of glass, while also enabling it to follow contours closely and adhere to provide a durable surface which can be left in place for extended periods, for example up to one year, to protect the surface of the article from dirt and dust, paint, minor knocks and scratches and the like. Once the need to protect the surface has passed, the protective coating can simply be stripped by hand. The removed film may then be disposed of as non-hazardous waste, for example in landfill, but it is preferably recycled by re-melting and incorporation into further coatings.

A UV stabiliser may be needed to enable the coating to remain strong and flexible after prolonged exposure to sunlight (and extremes of weather). A typical UV stabiliser is TINUVIN®. Hindered amine light stabilisers, nano pigments and zinc oxide compounds may be incorporated. An antioxidant may be incorporated to protect the product both in the molten and applied state, and such systems as BHT and BHT/ phosphine blends may be used.

## Claims

1. A temporary protective coating composition comprising more than 60% by weight of an ethylene vinyl acetate copolymer (EVA) with a melt flow index (MFI) less than 400 and less than 40% by weight of wax and which forms a flowable liquid at a temperature of from 120°C to 200°C, **characterised in that** it includes castor oil, hydrogenated castor oil or a mixture of these.

2. A composition according to Claim 1, wherein the castor oil and/or hydrogenated castor oil comprises 1-20% by weight of the composition.

3. A composition according to Claim 2, wherein the castor oil and/or hydrogenated castor oil comprises less than 15% by weight of the composition.

4. A composition according to any preceding claim, comprising more than 75% by weight of the EVA.

5. A composition according to any preceding claim, wherein the EVA comprises 14 to 60% by weight of vinyl acetate.

6. A composition according to Claim 5, wherein the EVA comprises at least 18% by weight of vinyl acetate.

7. A composition according to Claim 6, wherein the EVA comprises 28% by weight of vinyl acetate.

8. A composition according to any preceding claim, wherein the MFI of the EVA is less than 200.

9. A composition according to Claim 8, wherein the MFI is 100.

10. A composition according to any preceding claim, wherein the wax is a vinyl acetate modified wax.

11. A composition according to Claim 10, wherein the vinyl acetate modified wax comprises 14% vinyl acetate.

12. A composition according to any preceding claim, comprising 80% by weight EVA.

13. A composition according to Claim 12, comprising 15-19% by weight of a vinyl acetate modified wax.

14. A method of providing a temporary protective coating on an article, comprising heating a composition according to any preceding claim to a temperature of from 120°C to 200°C to form a flowing liquid, applying the liquid to the article to form a continuous film thereon, and allowing the liquid to solidify and adhere to the article, thereby providing a coating which may be removed manually from the article as a substantially continuous film.

## Patentansprüche

1. Eine vorübergehende Schutzbeschichtungszusammensetzung, enthaltend mehr als 60 Gewichts% eines Ethylen-Vinylacetat-Copolymers (EVA) mit einem Schmelzflussindex (MFI) kleiner als 400 und weniger als 40 Gewichts% Wachs, welche bei einer Temperatur von 120°C bis 200°C eine fließfähige Flüssigkeit bildet, **dadurch gekennzeichnet, dass** diese Rizinusöl, hydriertes Rizinusöl oder eine Mischung hieraus aufweist.

2. Zusammensetzung nach Anspruch 1, bei der das Rizinusöl und/oder hydrierte Rizinusöl 1 bis 20 Gewicht% der Zusammensetzung ausmacht.

3. Zusammensetzung nach Anspruch 2, bei der das Rizinusöl und/oder hydrierte Rizinusöl weniger als 15 Gewicht% der Zusammensetzung ausmacht.

4. Zusammensetzung nach einem der vorgenannten Ansprüche, enthaltend mehr als 75 Gewichts% EVA.

5. Zusammensetzung nach einem der vorgenannten Ansprüche, bei der das EVA 14 bis 60 Gewichts% Vinylacetat enthält.

6. Zusammensetzung nach Anspruch 5, bei der das EVA wenigstens 18 Gewichts% Vinylacetat enthält.

7. Zusammensetzung nach Anspruch 6, bei der das EVA 28 Gewichts% Vinylacetat enthält.

8. Zusammensetzung nach einem der vorgenannten Ansprüche, bei der der MFI des EVA kleiner als 200 ist.

9. Zusammensetzung nach Anspruch 8, bei der der MFI des EVA 100 ist.

10. Zusammensetzung nach einem der vorgenannten Ansprüche, bei der das Wachs ein vinylacetat-modifiziertes Wachs ist.

11. Zusammensetzung nach Anspruch 10, bei der das vinylacetat-modifizierte Wachs 14% Vinylacetat enthält.

12. Zusammensetzung nach einem der vorgenannten Ansprüche, enthaltend 80 Gewichts% EVA.

13. Zusammensetzung nach Anspruch 12, enthaltend 15-19 Gewichts% vinylacetat-modifiziertes Wachs.

14. Verfahren zum Bereitstellen einer temporären Schutzschicht an einem Gegenstands, umfassend Erhitzen einer Zusammensetzung nach einem der vorgenannten Ansprüche auf eine Temperatur von 120°C bis 200°C um eine fließfähige Flüssigkeit zu bilden, Applizieren der Flüssigkeit an dem Gegenstand unter Bildung eines kontinuierlichen Films, und Gestatten der Flüssigkeit sich zu verfestigen und an dem Gegenstand zu haften, wodurch eine Beschichtung bereitgestellt wird, welche von dem Gegenstand als im Wesentlichen kontinuierlicher Film manuell entfernbar ist.

## Revendications

1. Composition de revêtement de protection temporaire comprenant plus de 60 % en poids d'un copolymère éthylène-acétate de vinyle (EVA) ayant un indice de fluidité (MFI) inférieur à 400 et moins de 40 % en poids de cire et qui forme un liquide capable de s'écouler à une température de 120°C à 200°C, **caractérisée par le fait qu'**elle comprend de l'huile de ricin, de l'huile de ricin hydrogénée ou un mélange de celles-ci.

2. Composition selon la revendication 1, dans laquelle l'huile de ricin et/ou l'huile de ricin hydrogénée représente 1-20 % en poids de la composition.

3. Composition selon la revendication 2, dans laquelle l'huile de ricin et/ou l'huile de ricin hydrogénée représente moins de 15 % en poids de la composition.

4. Composition selon l'une quelconque des revendications précédentes, comprenant plus de 75 % en poids de l'EVA.

5. Composition selon l'une quelconque des revendications précédentes, dans laquelle l'EVA comprend 14 à 60 % en poids d'acétate de vinyle.

6. Composition selon la revendication 5, dans laquelle l'EVA comprend au moins 18 % en poids d'acétate de vinyle.

7. Composition selon la revendication 6, dans laquelle l'EVA comprend 28 % en poids d'acétate de vinyle.

8. Composition selon l'une quelconque des revendications précédentes, dans laquelle le MFI de l'EVA est inférieur à 200.

9. Composition selon la revendication 8, dans laquelle le MFI est 100.

10. Composition selon l'une quelconque des revendications précédentes, dans laquelle la cire est une cire modifiée par de l'acétate de vinyle.

11. Composition selon la revendication 10, dans laquelle la cire modifiée par de l'acétate de vinyle comprend 14 % d'acétate de vinyle.

12. Composition selon l'une quelconque des revendications précédentes, comprenant 80 % en poids d'EVA.

13. Composition selon la revendication 12, comprenant 15-19 % en poids d'une cire modifiée par de l'acétate de vinyle.

14. Procédé pour disposer un revêtement de protection temporaire sur un article, comprenant : chauffer une composition selon l'une quelconque des revendications précédentes à une température de 120°C à 200°C pour former un liquide s'écoulant, appliquer le liquide sur l'article pour former un film continu sur celui-ci et amener le liquide à se solidifier et à adhérer à l'article, fournissant par là un revêtement qui peut être retiré manuellement de l'article sous la forme d'un film sensiblement continu.
